# EUROPÄISCHE PATENTANMELDUNG

(11) **EP 2 784 298 A1**
(43) Veröffentlichungstag der Anmeldung: **01.10.2014**
(21) Anmeldenummer: 13160914.1
(22) Anmeldetag: 25.03.2013
(51) Int. Cl.: F02M 37/22

(54) **Öl- oder Kraftstofffilteranlage**

(71) Anmelder: Platthoff, Ingo, 981000 Monaco (MC)
(72) Erfinder: Platthoff, Ingo, 981000 Monaco (MC)
(74) Vertreter: Thiel, Christian

(57) **Zusammenfassung**

Die Erfindung betrifft eine Filteranlage für Öle und Kraftstoffe mit
- einer Zuleitung (2),
- wenigstens einer ersten Filtereinheit (4), die ein erstes Filtermedium zur Abtrennung von groben Partikeln aus zugeführtem Öl oder Kraftstoff enthält,
- wenigstens einer zweiten Filtereinheit (5), die ein zweites Filtermedium enthält, das das Filtrat der ersten Filtereinheit von feinen Partikeln und Wasser befreit,
- wenigstens einem Auffangbehälter (51) für abgetrenntes Material,
- wenigstens eine Schmutz-/Wasserpumpe (7) und
- einem Überwachungs- und Steuersystem.

## Beschreibung

Die Erfindung betrifft eine Öl- und Kraftstofffilteranlage zur Reinigung von Kraftstoffen, insbesondere von Dieselkraftstoff und Kerosin, sowie Leichtölen, insbesondere leichten Schmierstoffen und Hydraulikölen, von Partikeln und Wasser.

Dieselkraftstoffe, die überwiegend in Personen- und Lastkraftwagen, daneben aber auch in Generatoren, Industriemotoren, Lokomotiven und Schiffsdieselmotoren zum Einsatz kommen, enthalten stets Fremdpartikel, zumeist in Form von Wassertröpfchen. Zwar werden die Fremdpartikel bereits in der Raffinerie zu einem großen Teil ausfiltriert, jedoch sind die Filtereinstellungen so, dass auch Partikel in einer Größenordnung von mehr als 10µm in größerer Anzahl zurückbleiben. Bei der weiteren Handhabung und Lagerung reichern sich die Fremdpartikel erneut an, insbesondere auch durch Wasseraufnahme. Dieselkraftstoff, der an Zapfsäulen und in Lagertanks für den Einsatz zur Verfügung steht, enthält deshalb regelmäßig größere Mengen an Fremdpartikeln.

Bisher ist man davon ausgegangen, dass ein gewisser Anteil an Fremdpartikeln in Dieselkraftstoff oder Kerosin für den täglichen Betrieb tolerierbar ist. Dies ist aber aufgrund neuerer Erkenntnisse so nicht richtig. Fremdpartikel im Kraftstoff haben durchaus einen Einfluss auf den Schadstoffausstoß, wie jetzt gefunden wurde.

Aufgabe der Erfindung ist es, eine Einrichtung bereitzustellen, mit der der Fremdpartikelgehalt von Kraftstoffen, insbesondere Dieselkraftstoffen und Kerosin, sowie Ölen, insbesondere Hydraulikölen und leichten Schmierstoffen, über das bisher geübte Maß hinaus zuverlässig und kostengünstig herabgesetzt werden kann.

Diese Aufgabe wird mit einer Öl- und Kraftstofffilteranlage mit
- einer Zuleitung für Öl und Kraftstoff,
- wenigstens einer ersten Filtereinheit, die ein erstes Filtermedium zur Abtrennung von Partikeln aus zugeführtem Öl oder Kraftstoff enthält, wobei die Ausschlussgrenze zwischen 12µm und 4µm Partikelgröße liegt,
- wenigstens einer zweiten Filtereinheit, die ein zweites Filtermedium enthält, das das Filtrat der ersten Filtereinheit von Partikeln und Wasser befreit, wobei die Ausschlussgrenze bei einer Partikelgröße von 8µm oder weniger liegt,
- wenigstens einem Auffangbehälter für abgetrenntes Material,
- wenigstens einer Schmutz-/Wasserpumpe und
- einem Überwachungs- und Steuersystem
gelöst.

Erfindungsgemäß wird unter Öl und Kraftstoff insbesondere ein Öl und Kraftstoff aus Mitteldestillaten aus der Fraktionierung von Erdöl verstanden. Es handelt sich bei den Kraftstoffen um Dieselkraftstoff und Kerosin. Dieselkraftstoff ist in diesem Sinne nicht nur der üblicherweise in Kraftfahrzeugen eingesetzte Dieselkraftstoff, sondern auch Schiffsdiesel, Biodiesel, Dieselkraftstoff mit zugemischtem Biodieselanteil sowie Dieselblends für spezielle Verwendungen. Die Erfindung kann insbesondere auch angewandt werden auf Öle und Kraftstoffe, die aufgrund langer Lagerung Staubpartikel und Wasser aufgenommen haben und davon befreit werden müssen, wie auch gealterte Öle und Kraftstoffe, die einer Aufbereitung bedürfen.

Öle sind insbesondere Maschinenöle, Hydrauliköle, leichte Schmierstoffe und dergleichen.

Partikel im Sinne der Erfindung sind solche Partikel, die in fester oder Tröpfchenform in Kraftstoffen enthalten sind und nicht Kraftstoffe sind. Dies gilt beispielsweise für Schwebteilchen wie auch für Tröpfchen von Wasser, wasserhaltigen Flüssigkeiten oder Beimischungen. Grobe Partikel, die in der ersten Filtereinheit ausgefiltert werden sind solche, die eine Teilchengröße von mehr als 10µm und insbesondere mehr als 6µm haben. Feine Partikel mit einer Teilchengröße von weniger als 6µm, aber mehr als 1µm werden in der zweiten Filtereinheit abgeschieden.

Unter Ausschlussgrenze wird die kleinste Teilchengröße verstanden, die noch im jeweiligen Filter der Filtereinheit zurückgehalten wird, wobei die zweite Filtereinheit feiner eingestellt ist als die erste Filtereinheit.

Die Erfindung wird im folgenden Teil anhand einer Kraftstofffilteranlage beschrieben. Entsprechendes gilt für eine Filteranlage für Öle.

Mit der erfindungsgemäßen Kraftstofffilteranlage ist es möglich, einen Kraftstoff bereitzustellen, bei dessen Verbrennung in Motoren der Feinstaubausstoß des Motors signifikant gesenkt werden kann. Des Weiteren hat sich gezeigt, dass das bei hochbelasteten Motoren häufig auftretende Problem des vorzeitigen Verschleißens von Einspritzdüsen und Ventilen wirksam begegnet werden kann. Insbesondere bei Lokomotiven und Schiffsmotoren führt dieser vorzeitige Verschleiß zu hohen Betriebskosten, auch durch die damit verbundenen Ausfallzeiten bei entsprechendem Austausch dieser Komponenten. So kann ein Einspritzdüsensystem eines Schiffsdieselmotors bei Austausch Kosten in Höhe von 200.000,00 € verursachen. Eine Verlängerung der Standzeit dieser Einspritzsysteme ist daher äußerst wünschenswert.

Die erfindungsgemäßen Kraftstoffreinigungsanlagen können sowohl stationär als auch mobil eingesetzt werden. Beispielsweise können solche Kraftstofffilteranlagen an Tankstellen zwischen Dieseltank und Zapfsäule installiert werden. Bei Schiffen und anderen großen Maschinen, beispielsweise Lokomotiven, kann die Anlage aber auch auf dem Schiff bzw. auf der Lokomotive installiert werden, beispielsweise hinter dem Einfüllstutzen für den Kraftstoff oder in die Kraftstoffleitung zum Motor.

Die erfindungsgemäße Kraftstofffilteranlage besteht aus zwei zentralen Komponenten, nämlich einer ersten und einer zweiten Filtereinheit. Hinzu kommen die Kraftstoffzuleitung, eine Kraftstoffpumpe, sofern nicht eine vor Ort bereits vorhandene Pumpe angekoppelt werden kann, wenigstens ein Auffangbehälter für abgetrenntes Material, eine Schmutz-/Wasserpumpe und die notwendigen Überwachungs- und Steuereinrichtungen.

Die Kraftstoffpumpe ist vorzugsweise eine Impeller- oder Zahnradpumpe. Solche Pumpen sind geeignet, bestehende Strukturen in zu pumpenden Flüssigkeiten zu stören bzw. zu zerstören. Auf diese Weise können in dem zu pumpenden Kraftstoff vorhandene Aggregate, die die Partikel und insbesondere Wassertröpfchen stabil einbinden, so gestört werden, dass die Abscheidung in den nachfolgenden Filtereinheiten erleichtert wird.

Die erste Filtereinheit mit einem ersten Filtermedium dient dazu, grobe Partikel, insbesondere einer Größenordnung ≥ 10µm, vorzugsweise ≥ 6µm aus dem zugeführten Kraftstoff abzuscheiden. Hierbei wird bereits ein Großteil der Feststoffpartikel abgeschieden, aber auch ein Teil der Wassertröpfchen.

Vorzugsweise weist die erste Filtereinheit einen Rückspülfilter mit einem integrierten Zyklon auf. Solche Rückspülfilter sind beispielsweise in Hydraulikanlagen üblich und auf dem Markt für diesen Zweck erhältlich. Als Filtermedium kann in diesen Rückspülfiltern beispielsweise ein beschichtetes Metallgewebe eingesetzt werden, insbesondere ein solches, das hydrophob eingestellt ist. Als Beschichtungsmaterial kann beispielsweise ein Polyamid dienen. Andere Kunststoffe sind ebenfalls verwendbar.

Die Rückspülung kann beispielsweise mit Kraftstoff oder Druckluft erfolgen.

Die zweite Filtereinheit ist der ersten Filtereinheit nachgeschaltet und weist neben einem Partikelfilter insbesondere einen Coalescer-Filter auf. Solche Filter werden eingesetzt, um aus hydrophoben Flüssigkeiten feine Partikel und Wassertröpfchen abzuscheiden. Auch solche Filter sind für andere Zwecke grundsätzlich bekannt und kommerziell erhältlich. Die zweite Filtereinheit unterzieht das Filtrat der ersten Filtereinheit einer Feinfiltration. Abgeschieden werden Partikel einer Größe ≥ 8µm und Wassertröpfchen. Insbesondere entfernt die zweite Filtereinheit Partikel einer Größe ≥ 2µm aus dem Kraftstoff. Coalescer-Filter weisen zumeist als Filtermedium ein feines Filtergewebe auf, an dem sich Wassertröpfchen abscheiden. Ein solches Filtergewebe kann beispielsweise aus Glasfaser oder einem Kunststoff bestehen. Auch Metallgewebe sind geeignet. Es hat sich als vorteilhaft erwiesen, auswaschbare Filtergewebe, insbesondere Glasfasergewebe zu verwenden.

Die abgeschiedenen Materialien der ersten und zweiten Filtereinheit werden Sammelbehältern zugeführt. Dazu enthält die Kraftstofffilteranlage zumindest einen Auffangbehälter für abgetrenntes Material, in den das abgetrennte Material der ersten Filtereinheit unmittelbar eingetragen wird. Dieser Auffangbehälter ist vorzugsweise so ausgelegt, dass sich die verschiedenen darin sammelnden Materialien absetzen können, d.h. die festen Bestandteile nach unten sinken und sich das Wasser vom Restkraftstoff trennt. Der Restkraftstoff kann dann über eine Rückführ- oder Verbindungsleitung zur Kraftstoffzuleitung zum ersten Filter in das Verfahren zurückgeführt werden. Schlamm und Wasser können separat entsorgt werden.

Der Auffangbehälter kann als Sludge-Tank bezeichnet werden, in dem sich die abgeschiedenen festen Partikel, Wasser und auch Kraftstoff sammeln. Es ist vorteilhaft, einen solchen Sludge-Tank mit einer Absetzfunktion auszustatten, dergestalt, dass sich Schlamm, Wasser und Kraftstoff voneinander trennen. Der Kraftstoff wird in das Verfahren zurückgeführt, Wasser und Schlamm werden separat entsorgt. Einrichtungen zur Aufspaltung des abgeschiedenen Gemisches können beispielsweise mechanischer Natur sein, aber auch im Zusatz von geeigneten Zusatzstoffen oder in physikalischen Maßnahmen bestehen.

Die Rückstände der zweiten Filtereinheit können unmittelbar dem Auffangbehälter für abgetrenntes Material zugeführt werden. Zweckmäßigerweise befindet sich aber in der zweiten Filtereinheit am unteren Ende ein Wassertank, in dem abgeschiedenes Wasser mit Restpartikeln gesammelt wird. Dieser Wassertank kann periodisch in den allgemeinen Auffangbehälter hinein oder entleert werden.

Die Filteranlage kann zusätzlich einen Tank für Additive aufweisen, die dem filtrierten Kraftstoff über eine Dosierpumpe zugesetzt werden können, etwa in einem Verhältnis von 1:100 bis 1:5000.

Die erfindungsgemäße Kraftstofffilteranlage kann in ihrer Kapazität auf den jeweiligen Einsatzzweck hin optimiert werden. Insbesondere bei Durchsatz größerer Mengen ist es zweckmäßig, mehr als nur eine erste und/oder zweite Filtereinheit vorzusehen. Da in der Regel die erste Filtereinheit eine größere Kapazität hat als die zweite Filtereinheit, ist es beispielsweise zweckmäßig, der ersten Filtereinheit zwei zweite Filtereinheiten nachzuschalten.

Die erfindungsgemäße Kraftstofffilteranlage weist darüber hinaus die notwendigen Überwachungs- und Steuerfunktionen auf. Von besonderer Bedeutung ist dabei die Drucksensorik zur Steuerung der Regenerierung der Filtereinheiten. Die erste Filtereinheit ist vorzugsweise ein Rückspülfilter, der bei Überschreiten eines gewissen Differenzdrucks zwischen Normalzustand und beladenem Zustand einen Rückspülprozess auslöst, der abgesetztes Material aus dem Filter heraus spült. Solche Filter sind bekannt und kommerziell erhältlich. Auch die zweite Filtereinheit muss von Zeit zu Zeit gereinigt werden, beispielsweise durch Rückspülen, Auswaschen oder Austausch des Filtermediums, wenn ein gewisser Druck überschritten wird.

Die jeweils vorhandenen Tanks weisen ebenfalls eine Sensorik in Form von Level-Schaltern auf, die die automatische Entleerung und das Ende des Entleerungsprozesses steuern.

Darüber hinaus weist die Anlage steuerbare Ventile, Beipässe, Drucksensoren in den Leitungen, Temperatursensoren, Trübungsmesser und dergleichen zur Überwachung des Prozessstroms und der Qualität des Produkts auf.

Die erfindungsgemäße Kraftstofffilteranlage wird insbesondere zur Reinigung von Mitteldestillaten aus der Fraktionierung von Erdöl verwandt, wobei im Vordergrund die verschiedenen Varianten von Dieselkraftstoff und Kerosin stehen.

Die Erfindung wird durch das nachfolgende Ausführungsbeispiel anhand eines Flussdiagramms einer Kraftstofffilteranlage näher erläutert. Für die Filtrierung von Ölen gilt entsprechendes.

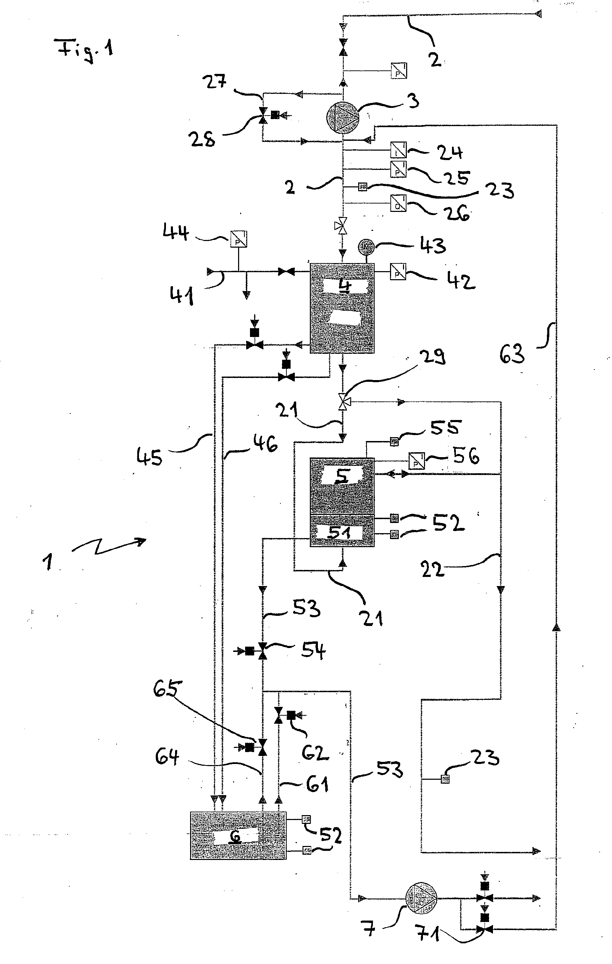

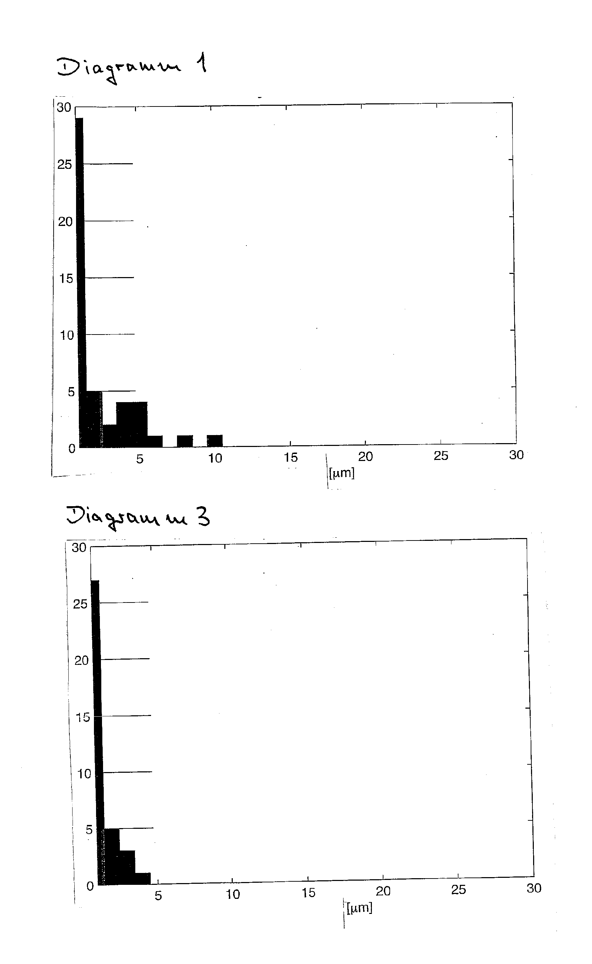

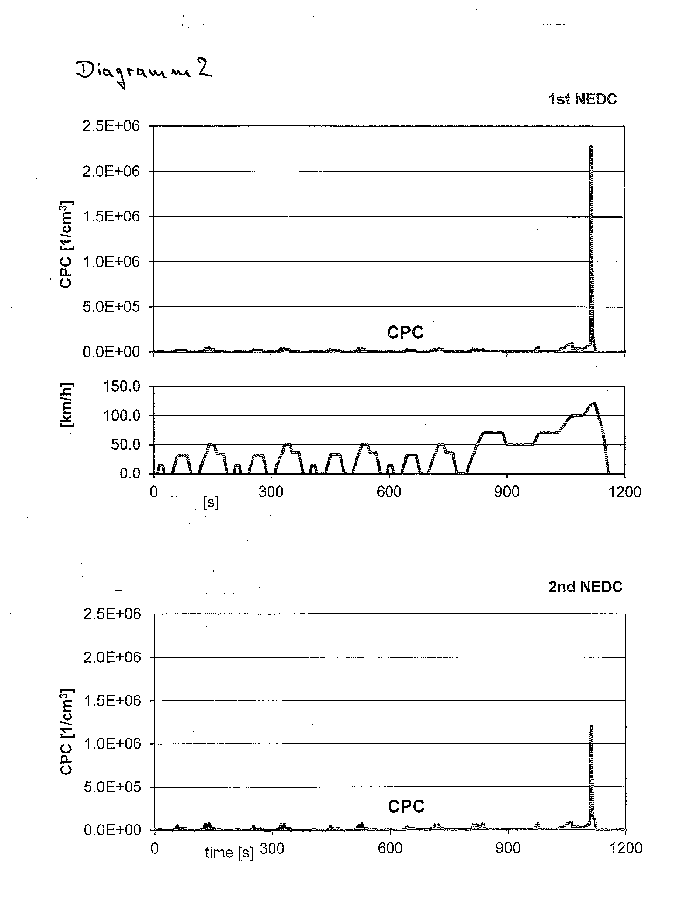

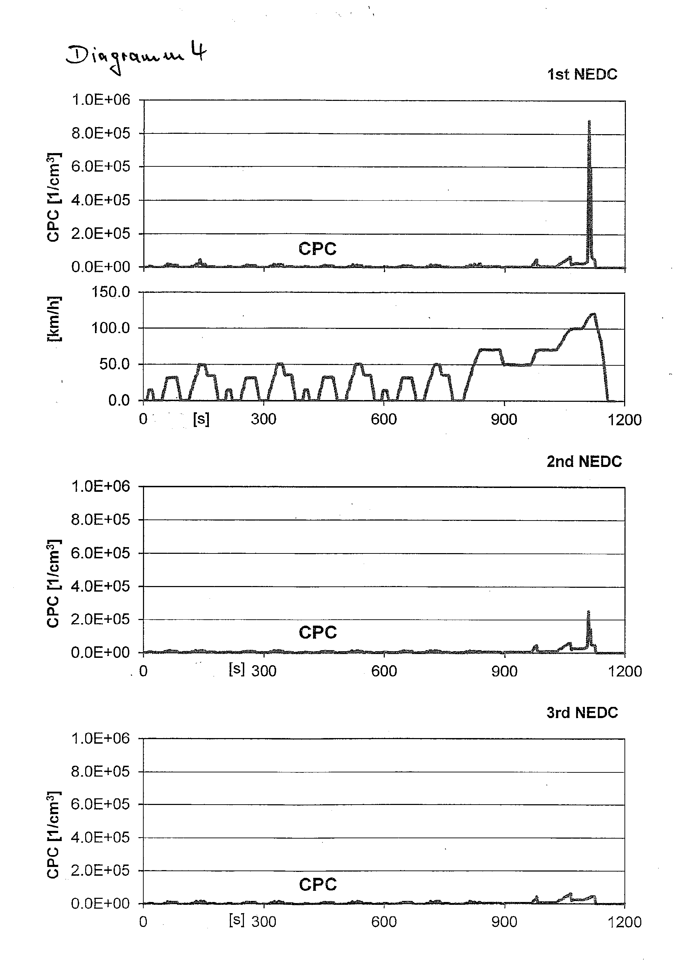

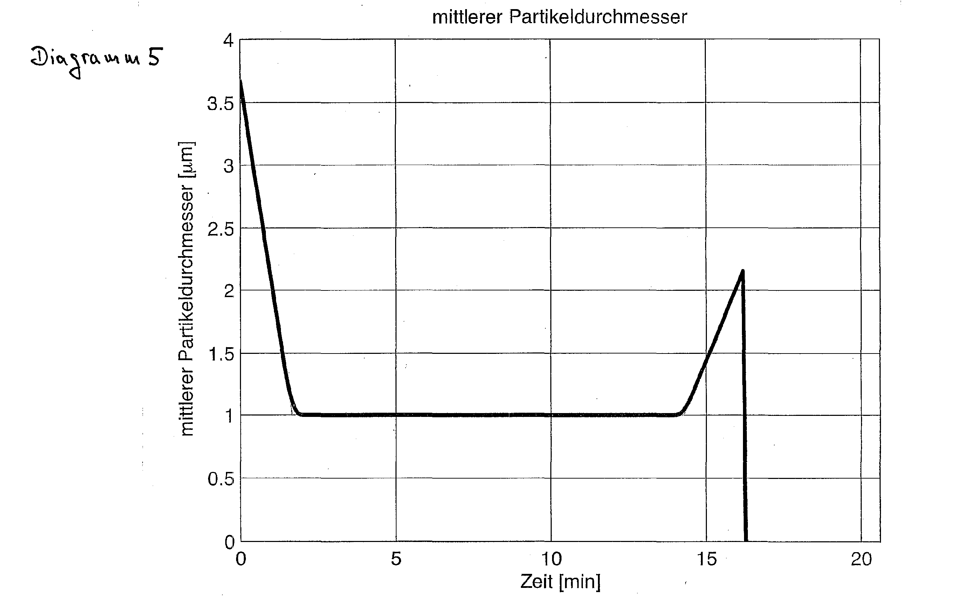

Abbildung 1 zeigt in Form eines Flussdiagramms eine erfindungsgemäße Kraftstofffilteranlage 1 mit einer Zuleitung 2, einer in die Zuleitung 2 eingeschalteten Kraftstoffpumpe 3, einer ersten Filtereinheit 4, einer zweiten Filtereinheit 5, einem Sludge-Tank 6 sowie einer Entleerungspumpe 7. Die Kraftstoffzuführung 2 führt über die Pumpe 3 der Filtereinheit 4 frischen Kraftstoff zu, der dort, vorzugsweise mit einem Rückspülfilter mit integriertem Zyklon, von gröberen Partikeln befreit wird. Der grob gereinigte Kraftstoff gelangt anschließend über die Leitung 21 in die zweite Filtereinheit 5 und von dort über die Leitung 22 in einen Tank für gereinigten Kraftstoff (nicht dargestellt). In die Leitungen 2 und 22 eingeschaltete Trübungsmesser 23 geben Aufschluss über die Qualität des zugeführten und gereinigten Kraftstoffs. Für den Betrieb der Anlage wichtige Parameter, wie die Temperatur, den Druck und den Durchfluss werden über entsprechende Temperatursensoren 24, Drucksensoren 25 und Durchflussmesser 26 erfasst.

Die Zuleitung 2 weist einen Beipass 27 mit einem Beipassventil 28 auf, für den Fall, dass die Kraftstoffpumpe zum Betrieb der Anlage nicht benötigt wird. Ein weiteres Ventil 29 ist in die Leitung 21 zwischen den Filtereinheiten 4 und 5 vorgesehen, mit dem grob filtrierter Kraftstoff, so dieser ausreichend gereinigt ist, der Leitung 22 und damit dem Lagertank zugeführt werden kann.

Die Kraftstoffpumpe ist eine Impeller-/Zahnradpumpe mit eingebautem Elektromotor zur Kraftstoffversorgung der Filter. Ihre Kapazität ist so bemessen, dass sie den notwendigen Betriebsdruck für den Betrieb der Filtereinrichtungen und die notwendige Kraftstoffmenge liefern kann. Je nach Auslegung der Pumpe sind Kraftstoffmengen von 1500l/h, 2100l/h oder mehr als 12000l/h realisierbar.

Die erste Filtereinheit 4 weist eine Luftdruckversorgung über die Leitung 41 auf, mit der die Rückspülung ausgelöst wird. Drucksensoren 42 und 44 dienen der Überwachung; Drucksensor 42 ist ein Differenzdrucksensor, der bei Übersteigen des Betriebsdrucks über den normalen Betriebsdruck die Rückspülfunktion über den Reinigungsmotor 43 auslöst. Der Drucksensor 44 dient der Überwachung des Luftdrucks für die Rückspülfunktion. Alternativ kann über die Leitung 41 auch Kraftstoff zur Rückspülung eingespeist werden.

In der ersten Filtereinheit 4 abgeschiedener Sludge wird teils unmittelbar über die Leitung 45 dem Sludge-Tank 6 zugeführt, teilweise im Bodenteil der Filtereinheit 4 gesammelt und über die Leitung 46 dem Sludge-Tank zugeführt. Die Leitung 46 wird über ein Ventil nach Bedarf geschaltet, die Leitung 45 befindet sich in permanentem Betrieb.

Filtrat aus der ersten Filtereinheit 4 wird über die Leitung 21 der zweiten Filtereinheit 5 zugeführt. Die zweite Filtereinheit 5 ist ein Coalescer-Filter mit einem zylindrischen Einsatz aus einem feinen Gewebe, an dem sich insbesondere Wassertröpfchen absetzen. Die Wassertröpfchen laufen an dem Gewebe ab und sammeln sich in einem Wassertank 51, der beispielsweise ein Fassungsvermögen von 2 bis 5l hat. Level-Schalter 52 sorgen dafür, dass der Wassertank regelmäßig über die Leitung 53 entleert wird. Die Leitung 53 führt über das Entleerungsventil 54 unmittelbar zur Entleerungspumpe 7 und von dort in die Entsorgung.

Die zweite Filtereinheit 5 wird über einen Eingangsdrucksensor 56 und einen Druckschalter 55 überwacht und bei Überschreiten eines vorgegebenen Drucks entweder automatisch oder aber per Hand - beispielsweise durch Austausch oder Auswaschen des Filtermediums - gereinigt.

Das Filtrat aus der zweiten Filtereinheit 5 gelangt schließlich über die Leitung 22 unmittelbar in den Lagertank.

Der Sludge-Tank 6 wird über die Leitungen 45 und 46 mit Sludge aus der ersten Filtereinheit 4 versorgt. Dieser sammelt sich in dem Tank und bekommt dort Zeit zur Separierung. Der Tank muss entsprechend dimensioniert sein. Die Trennung in Schlamm, Wasser und Kraftstoff kann dazu genutzt werden, den Kraftstoffanteil über die Leitung 61 und das Ventil 62 der Leitung 53 zuzuführen, die über die Entleerungspumpe 7 und ein Ventil 71 der Rückführleitung 63 zuzuführen, die im Bereich der Kraftstoffpumpe 3 in die Zuleitung 2 führt. Auf diese Art und Weise wird aus dem Sludge-Tank gewonnener Kraftstoff wieder in das Verfahren eingespeist.

Level-Schalter 52 regulieren die Entleerung des Sludge-Tanks, wobei Schlamm und Wasser über die Leitung 64, das Entleerungsventil 65, die Leitung 53 und die Entleerungspumpe 7 der Entsorgung zugeführt werden.

Insbesondere kann die Filteranlage auch einen separaten Tank für Additive aufweisen, der zweckmäßigerweise an den Sludge-Tank 6 angebaut wird (nicht dargestellt). Die Additive können über eine Dosierpumpe dem Filtrat in der Leitung 22 dosiert, etwa im Verhältnis 1:1000, zugesetzt werden.

Es versteht sich, dass die erfindungsgemäße Anlage 1 über weitere Sensorik zur Sicherstellung des Betriebs, über Anzeigen und entsprechende Aufzeichnungsgeräte verfügt, um ein Qualitätsmanagement zu ermöglichen.

Mit der in Abbildung 1 dargestellten Anlage ist es möglich, im Automatikbetrieb 2 bis 3 Mio. I Kraftstoff zu filtrieren. In der ersten Filtereinheit werden etwa 50% der Wassertröpfchen beseitigt, in der zweiten Filtereinheit liegt der Abscheidungsgrad bei mehr als 90%.

Eingesetzt werden können beispielsweise Filter von der Firma Mahle, etwa ein Automatik-Rückspülfilter AF172G3 in der ersten Filtereinheit und ein Coalescer-Filter PiW2075 in der zweiten Filtereinheit. In der Regel ist die Kapazität der Automatik-Rückspülfilter in der ersten Filtereinheit größer als die der Coalescer-Filter in der zweiten Filtereinheit, weshalb es sinnvoll sein kann, zur Erhöhung der Kapazität einen Automatik-Rückspülfilter der ersten Filtereinheit mit zwei Coalescer-Filtern der zweiten Filtereinheit zu koppeln. Die dargestellte Anlage hat beispielsweise eine Kapazität von 2100l/h.

Mit der in Abbildung 1 dargestellten Anlage wurden Testversuche gefahren, bei denen ein herkömmlicher LKW-Dieselmotor zum Einsatz kam (Firma Iveco). Die Tests wurden im herkömmlichen NEDC-Testzyklus warm gefahren und ergaben, im Vergleich zu ungefiltertem Standarddiesel eine deutliche Verminderung der Partikelzahl und Partikelmasse im Abgas.

Diagramm 1 zeigt die Größenverteilung der ausgewerteten Partikel einer Standard-Dieselprobe (Fassdiesel) mit einem Maximum der Größe bei ≤ 1µm. Die Partikel reichen bis in den Bereich von 10µm. Im NEDC-Testzyklus ergibt sich eine maximale Partikelzahl von 2,3 x 10⁶/cm³ im ersten (Referenz) Zyklus und von 1,2 x 10⁶ im zweiten (Test) Zyklus. Das Diagramm 2 zeigt die Partikelzahlen in Abhängigkeit von der Geschwindigkeit im Zyklus.

In Diagramm 3 ist die Größenverteilung der ausgewerteten Partikel in gefiltertem Diesel dargestellt (2µm Coalescer-Filter) mit im Wesentlichen unveränderter Partikelzahl im Bereich ≤ 1µm und einer stark verminderten Partikelzahl ≥ 3µm.

Der im Diagramm 4 dargestellte NEDC-Testzyklus ergibt eine starke Reduktion der Partikel auf maximal 9 x 10⁵/cm³ im ersten (Referenz) Zyklus, 2,5 x 10⁵ im zweiten (Test) Zyklus und 2,5 x 10⁴ im dritten (Test) Zyklus.

In der nachfolgenden Tabelle sind Partikelmasse (mg/km) und Partikelzahl (/km) von ungefiltertem und gefiltertem Diesel gegenübergestellt. Es zeigt sich eine erhebliche Reduktion.

| Diesel ungefiltert | Diesel gefiltert |
|---|---|
| 3,3 x 10¹¹/km | 1,4 x 10¹¹/km |
| 57,6 mg/km | 21,9 mg/km |

Diagramm 5 zeigt den Partikelgehalt einer Dieselprobe nach der Filtration in der ersten Filtereinheit (Zeitpunkt 0) und nach Zuschalten der zweiten Filtereinheit (2min - 14min). Nach Abschalten der zweiten Filtereinheit steigt der Partikelgehalt wieder an. Angegeben ist der mittlere Partikeldurchmesser, der das Ausfiltrieren grober Teilchen wiederspiegelt.

Neben der Verminderung des Partikelausstoßes ergibt sich eine geringfügige Verminderung des CO-Ausstoßes bei gleichzeitig leicht erhöhtem CO₂-Ausstoß. Der Verbrauch an Dieselkraftstoff kann durch den Filterprozess, insbesondere bei Dieselkraftstoff schlechter Qualität, gesenkt werden.

## Patentansprüche

1. Filteranlage für Öle und Kraftstoffe mit
- einer Zuleitung für Öl und Kraftstoff,
- wenigstens einer ersten Filtereinheit, die ein erstes Filtermedium zur Abtrennung von Partikeln aus zugeführtem Öl oder Kraftstoff enthält, wobei die Ausschlussgrenze zwischen 12µm und 4µm Partikelgröße liegt,
- wenigstens einer zweiten Filtereinheit, die ein zweites Filtermedium enthält, das das Filtrat der ersten Filtereinheit von Partikeln und Wasser befreit, wobei die Ausschlussgrenze bei einer Partikelgröße von 8µm oder weniger liegt,
- wenigstens einem Auffangbehälter für abgetrenntes Material,
- wenigstens einer Schmutz-/Wasserpumpe und
- einem Überwachungs- und Steuersystem.

2. Filteranlage nach Anspruch 1 mit einer Pumpe in der Zuleitung zur Versorgung der Filtereinheit mit Öl oder Kraftstoff.

3. Filteranlage nach Anspruch 1 oder 2, **dadurch gekennzeichnet, dass** die Pumpe eine Impeller/Zahnradpumpe ist.

4. Filteranlage nach einem der vorstehenden Ansprüche, **dadurch gekennzeichnet, dass** der Auffangbehälter ein Sludge-Tank mit Absetzfunktion ist.

5. Filteranlage nach Anspruch 4, **dadurch gekennzeichnet, dass** der Sludge-Tank über eine Rückführleitung mit der Zuleitung der ersten Filtereinheit verbunden ist, um abgetrenntes Öl oder abgetrennten Kraftstoff der ersten Filtereinheit zuzuführen.

6. Filteranlage nach einem der vorstehenden Ansprüche, **dadurch gekennzeichnet, dass** die erste Filtereinheit einen Rückspülfilter mit integriertem Zyklon aufweist.

7. Filteranlage nach Anspruch 6, **dadurch gekennzeichnet, dass** das Filtermedium der ersten Filtereinheit ein hydrophob beschichtetes Metallgewebe ist.

8. Filteranlage nach einem der vorstehenden Ansprüche, **dadurch gekennzeichnet, dass** das erste Filtermedium Partikel ≥ 6µm aus dem zugeführten Kraftstoff abscheidet.

9. Filteranlage nach einem der vorstehenden Ansprüche, **dadurch gekennzeichnet, dass** die zweite Filtereinheit einen Coalescer-Filter aufweist.

10. Filteranlage nach Anspruch 9, **dadurch gekennzeichnet, dass** die zweite Filtereinheit ein Filtergewebe, insbesondere aus Glasfaser oder einem Kunststoff, als Filtermedium zur Wasserabscheidung aufweist.

11. Filteranlage nach einem der vorstehenden Ansprüche, **dadurch gekennzeichnet, dass** die zweite Filtereinheit einen Wassertank zur Aufnahme abgeschiedenen Wassers aufweist.

12. Filteranlage nach einem der vorstehenden Ansprüche, **dadurch gekennzeichnet, dass** die zweite Filtereinheit ein Filtermedium aufweist, mit dem Partikel ≥ 2µm abgeschieden werden.

13. Filteranlage nach einem der vorstehenden Ansprüche, **gekennzeichnet durch** Einrichtungen zur Überwachung des Durchsatzes und der Qualität des Öls oder Kraftstoffs.

14. Filteranlage nach Anspruch 13, **gekennzeichnet durch** Drucksensoren zur Überwachung der Funktionsfähigkeit und Einleitung der Reinigungsprozesse der Filtereinheiten.

15. Verwendung der Filteranlage nach einem der vorstehenden Ansprüche zur Reinigung von Mitteldestillaten aus der Fraktionierung von Erdöl, insbesondere zur Reinigung von Hydrauliköl, Dieselkraftstoff und Kerosin.
